# FASCICULE DE BREVET EUROPEEN

(11) **EP 1 163 130 B1**
(45) Date de publication et mention de la délivrance du brevet: **15.01.2003**
(21) Numéro de dépôt: 00910970.3
(22) Date de dépôt: 16.03.2000
(51) Int. Cl.: B60R 21/13

(54) **ARCEAU DE PROTECTION POUR VEHICULE DECOUVRABLE A TOIT REPLIABLE**
ÜBERROLLSCHUTZBÜGEL FÜR EIN KABRIOLETTFAHRZEUG MIT FALTVERDECK
ROLLBAR FOR CONVERTIBLE VEHICLE WITH FOLDING ROOF

(30) Priorité: 16.03.1999 FR 9903244
(43) Date de publication de la demande: 19.12.2001
(73) Titulaire: Société Européenne de Brevets Automobiles, 75011 Paris (FR)
(72) Inventeur: GUILLEZ, Jean-Marc, 79140 Cerizay (FR); QUEVEAU, Paul, 79140 Cerizay (FR); QUEVEAU, Gérard, 79140 Cerizay (FR)
(74) Mandataire: Rémont, Claude
(86) Numéro de dépôt international: FR0000647
(87) Numéro de publication internationale: WO00055015

(56) Documents cités:
- EP-A- 0 411 449
- EP-A- 0 504 482
- WO-A-91/02669
- DE-A- 1 555 955

## Description

La présente invention concerne un arceau de protection pour véhicule découvrable à toit repliable, pour protéger les passagers en cas de retournement du véhicule. Un tel arceau de protection selon le préambule de la revendication 1 est counnu de EP 0 504 482 A.

On connaît des véhicules découvrables à toit repliable comportant un arceau de protection solidaire du châssis du véhicule et déplaçable entre une position escamotée compatible avec la présence du toit repliable sur le véhicule et une position dans laquelle, en l'absence du toit, l'arceau fait suffisamment saillie de la plage arrière du véhicule pour protéger les passagers en cas de retournement du véhicule.

Afin d'optimiser les fonctionnalités du véhicule, notamment d'un véhicule très court, le passager arrière doit être le plus reculé possible et le toit replié dans le coffre le plus avancé possible. Ces deux conditions combinées en plus à la pente du toit et la rotation d'une plage arrière vers l'avant limitent l'accrochage de l'arceau à une zone située à l'avant de la plage arrière.

Cet arceau est limité par le toit lorsque celui-ci est fermé et doit s'élever à une position située au-dessus de la tête des passagers lorsque le toit est replié dans le coffre arrière afin de protéger de manière convenable les passagers lors d'un retournement.

De plus, la zone d'accrochage de l'arceau doit être liée au châssis du véhicule en partie latérale afin de créer une liaison rigide entre l'arceau et ce même châssis.

Le but de la présente invention est de créer un arceau de protection permettant d'atteindre les objectifs ci-dessus.

Suivant l'invention, cet arceau de protection est caractérisé en ce que l'arceau est constitué par deux éléments d'arceau articulés l'un à l'autre au sommet de l'arceau, les extrémités inférieures de chaque élément d'arceau pouvant coulisser suivant une droite parallèle à la plage arrière du véhicule et située sous cette plage, entre une première position dans laquelle les deux extrémités des éléments d'arceau sont éloignés l'une de l'autre et l'articulation est rapprochée de ladite droite et une seconde position dans laquelle les deux extrémités des éléments d'arceau sont rapprochées l'une de l'autre et l'articulation est éloignée de ladite droite.

Grâce à cette disposition, lorsque l'arceau est dans la première position, il n'empiète ni sur la place disponible dans le coffre, ni sur celle disponible entre le coffre et l'habitacle.

Dans les deux positions en effet les extrémités inférieures de l'arceau sont situées sur une droite qui peut être située à l'avant d'une plage arrière pouvant être escamotée pour permettre le passage et le rangement du toit replié à l'intérieur du coffre.

De préférence, l'arceau de protection est constitué par deux arceaux espacés et alignés suivant ladite droite.

De préférence également, chaque extrémité d'un élément d'arceau comprend un galet monté dans une glissière s'étendant suivant ladite droite.

Selon une version avantageuse de l'invention, le rapprochement ou l'éloignement des extrémités des éléments d'arceaux est commandé par la rotation d'une tige filetée engagée dans des taraudages correspondants solidaires des extrémités des éléments d'arceaux, le pas de vis de la tige filetée étant inversé pour l'un des taraudages par rapport à l'autre taraudage.

La rotation de la tige filetée peut être commandée par un moteur ou par le pivotement du toit repliable entre la position dans laquelle ce toit est en place sur le véhicule et la position dans laquelle le toit est rangé à l'intérieur du coffre du véhicule.

D'autres particularités et avantages de l'invention apparaîtront encore dans la description ci-après.

Aux dessins annexés donnés à titre d'exemples non limitatifs :
- la figure 1 est une vue schématique en coupe longitudinale partielle d'un véhicule découvrable équipé d'un arceau de protection conforme à l'invention ;
- la figure 2 est une vue en coupe longitudinale à plus grande échelle montrant en particulier les deux positions de l'arceau ;
- la figure 3 est une vue en perspective montrant les deux arceaux et leurs accessoires de commande ;
- la figure 4 montre un détail de la figure 3 ;
- la figure 5 est une vue en plan d'un arceau et de la glissière de coulissement ;
- la figure 6 est une vue en coupe suivant le plan VI-VI de la figure 5 ;
- la figure 7 est une vue en perspective montrant la tige filetée commandant le déplacement des extrémités des deux éléments d'un arceau.

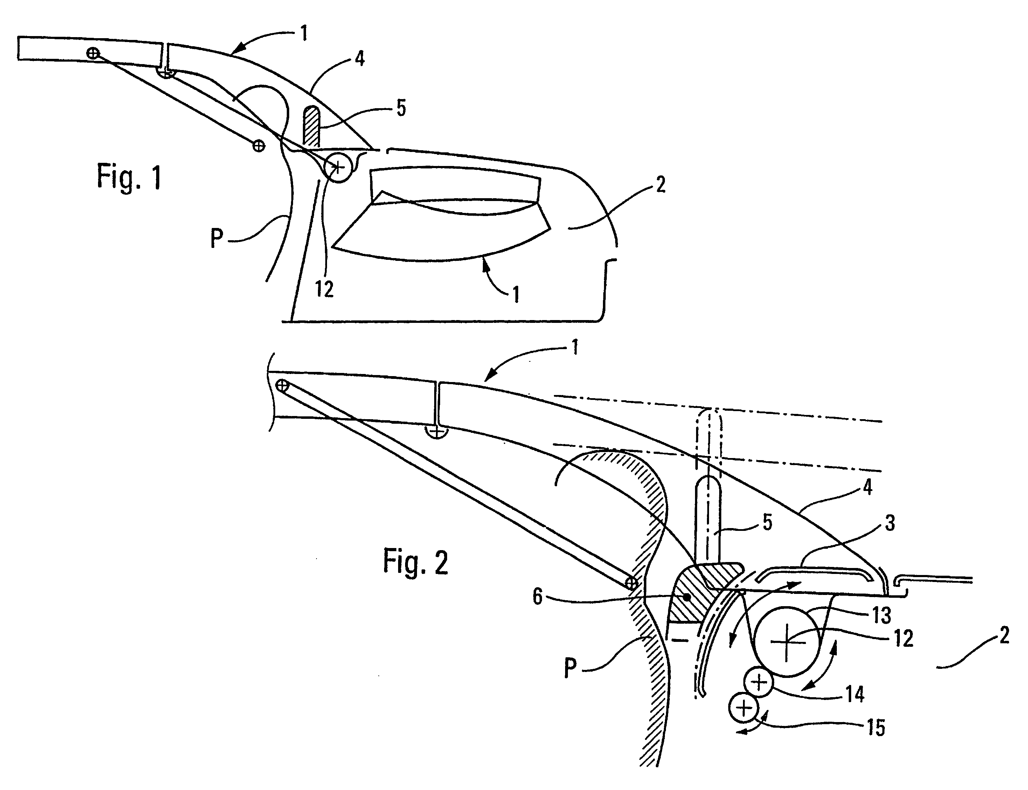

Les figures 1 et 2 représentent un véhicule, découvrable à toit repliable 1 pouvant être rangé dans le coffre arrière 2 après basculement vers l'avant de la plage arrière 3 située sous la lunette arrière 4 du toit 1.

A l'avant de cette plage arrière 3 est situé un arceau 5 solidaire d'une partie 6 reliée au châssis. Cet arceau 5 est déplaçable entre une position escamotée compatible avec la présence du toit repliable 1 sur le véhicule et une position (représentée en traits mixtes sur la figure 2) dans laquelle, en l'absence du toit, l'arceau fait suffisamment saillie au-dessus de la plage arrière 3 du véhicule pour protéger les passagers P en cas de retournement du véhicule.

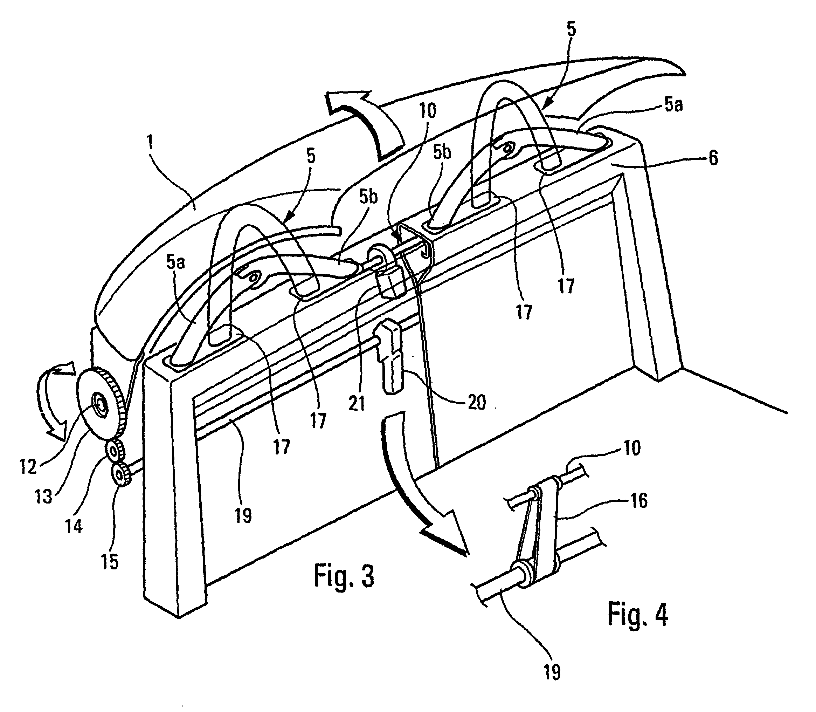

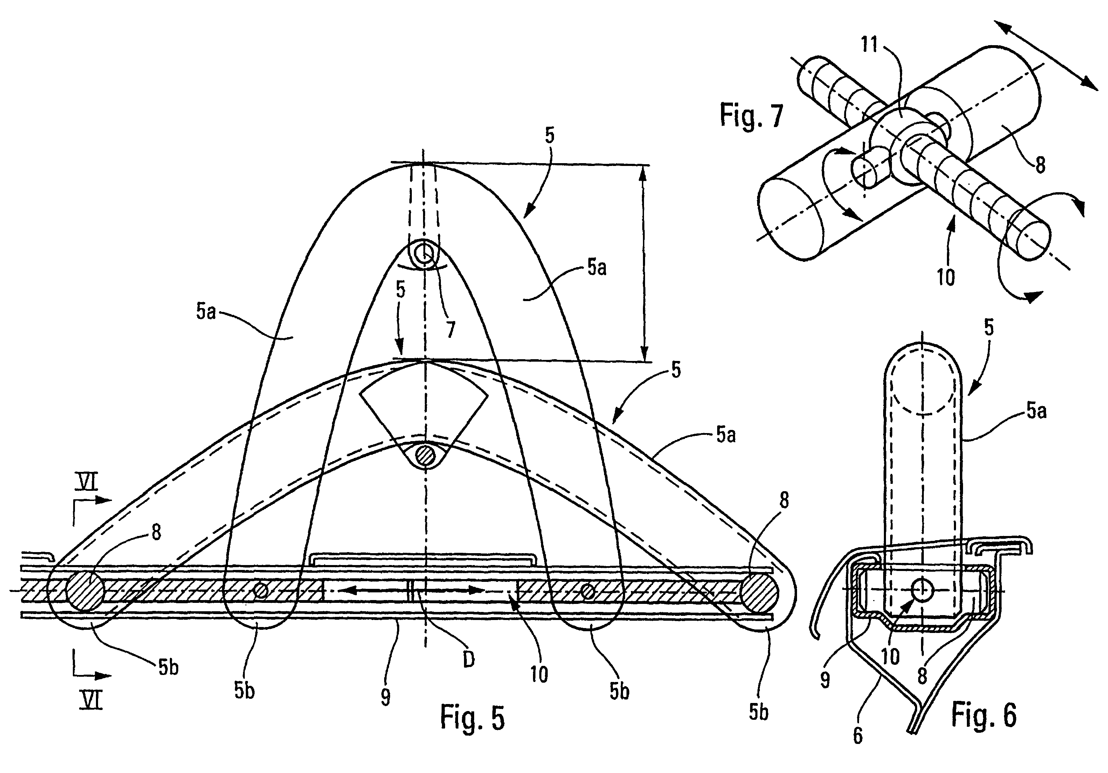

Conformément à l'invention, (voir figures 3 et 5) l'arceau 5 est constitué par deux éléments d'arceau 5a articulés l'un à l'autre en 7 près du sommet de l'arceau 5.

Les extrémités inférieures 5b de chaque élément d'arceau 5a peuvent coulisser suivant une droite D parallèle à la plage arrière 3 du véhicule et située sous cette plage, entre une première position dans laquelle les deux extrémités 5b des éléments d'arceau sont éloignées l'une de l'autre et l'articulation 7 est rapprochée de la droite D et une seconde position dans laquelle les deux extrémités 5b des éléments d'arceau sont rapprochées l'une de l'autre et l'articulation 7 est éloignée de la droite D.

Comme indiqué sur la figure 3, le véhicule comprend deux arceaux 5 espacés et alignés suivant la droite D.

Les figures 5 et 6 montrent que chaque extrémité 5b d'un élément d'arceau 5a comprend un galet 8 monté dans une glissière 9 s'étendant suivant la droite D.

Par ailleurs, le rapprochement ou l'éloignement des extrémités 5b des éléments d'arceau 5a est commandé par la rotation d'une tige filetée 10 engagée dans des taraudages 11 correspondants (voir figure 7) solidaires des extrémités 5b des éléments d'arceau 5a.

D'autre part, comme indiqué sur la figure 5, le pas de vis de la tige filetée 10 est inversé pour l'un des taraudages 11 par rapport à l'autre taraudage, pour permettre le mouvement de rapprochement ou d'éloignement précité.

La rotation de la tige filetée 10 peut être commandée par un moteur électrique.

La rotation de la tige filetée 10 peut également être commandée par le pivotement autour de l'axe 12 (voir figure 2 et 3) du toit repliable 1 entre la position dans laquelle, ce toit 1 est en place sur le véhicule et la position dans laquelle le toit 1 est rangé à l'intérieur du coffre 2 du véhicule.

La transmission entre le mouvement de pivotement du toit repliable 1 et la rotation de la tige filetée 10 est réalisée au moyen d'une série de pignons 13, 14, 15 engrenés les uns avec les autres et d'une courroie crantée 16 (voir figure 4) pour obtenir le rapport de multiplication approprié.

La figure 3 montre par ailleurs que les extrémités 5b de chaque élément d'arceau 5a sont engagées dans des évidements allongés 17 pratiqués dans une poutre creuse 7 s'étendant à l'avant de la plage arrière 3 du véhicule. La longueur des évidements allongés 17 est bien entendu suffisante pour permettre le déplacement des extrémités 5b des éléments d'arceau 5a entre les deux positions décrites ci-dessus.

Le dispositif que l'on vient de décrire fonctionne de la façon suivante :
Le moteur 20 entraîne la rotation du pignon denté 13 lié au toit 1 par l'intermédiaire de l'arbre 19 et des deux pignons 14 et 15.
La rotation du toit 1 vers l'arrière entraîne la rotation de la tige filetée 10 par l'intermédiaire de la courroie crantée 16.
La rotation de la tige filetée entraîne la translation des extrémités 5b des éléments d'arceau 5a grâce aux taraudages 11.
Les arceaux 5 se déplacent ainsi entre la position escamotée et la position redressée représentées sur les figures 2, 3 et 5.
Le déplacement des arceaux 5 en sens inverse se produit lors de la fermeture du toit.
La rotation du toit 1 et celle de la tige filetée 10 peuvent être commandées par des moteurs 20 et 21 séparés. Dans ce cas, la liaison entre l'arbre 19 et la tige filetée 10 au moyen de la courroie crantée 16 est supprimée.

Bien entendu, l'invention n'est pas limitée à l'exemple que l'on vient de décrire et on peut apporter à celui-ci de nombreuses modifications sans sortir du cadre de l'invention.

## Revendications

1. Arceau de protection pour véhicule découvrable à toit repliable (1), cet arceau (5) étant solidaire du châssis du véhicule et étant déplaçable entre une position escamotée compatible avec la présence du toit repliable (1) sur le véhicule et une position dans laquelle, en l'absence du toit (1), l'arceau (5) fait suffisamment saillie au-dessus de la plage arrière (3) du véhicule pour protéger les passagers (P) en cas de retournement du véhicule, **caractérisé en ce que** l'arceau (5) est constitué par deux éléments d'arceau (5a) articulés l'un à l'autre au sommet de l'arceau, les extrémités inférieures (5b) de chaque élément d'arceau (5) pouvant coulisser suivant une droite (D) parallèle à la plage arrière (3) du véhicule et située sous cette plage, entre une première position dans laquelle les deux extrémités (5b) des éléments d'arceau (5a) sont éloignées l'une de l'autre et l'articulation (7) est rapprochée de ladite droite (D) et une seconde position dans laquelle les deux extrémités (5b) des éléments d'arceau sont rapprochées l'une de l'autre et l'articulation (7) est éloignée de ladite droite (D).

2. Arceau de protection conforme à la revendication 1, **caractérisé en ce qu'**il est constitué par deux arceaux (5) espacés et alignés suivant ladite droite (D).

3. Arceau de protection conforme à l'une des revendications 1 ou 2, **caractérisé en ce que** chaque extrémité (5b) d'un élément d'arceau (5) comprend un galet (8) monté dans une glissière (9) s'étendant suivant ladite droite (D).

4. Arceau de protection conforme à l'une des revendications 1 à 3, **caractérisé en ce que** le rapprochement ou l'éloignement des extrémités (5b) des éléments d'arceau (5) est commandé par la rotation d'une tige filetée (10) engagée dans des taraudages correspondants (11) solidaires des extrémités (5b) des éléments d'arceau, le pas de vis de la tige filetée (10) étant inversé pour l'un des taraudages par rapport à l'autre taraudage.

5. Arceau de protection conforme à la revendication 4, **caractérisé en ce que** la rotation de la tige filetée (10) est commandée par un moteur (21).

6. Arceau de protection conforme à la revendication 4, **caractérisé en ce que** la rotation de la tige filetée (10) est commandée par le pivotement du toit repliable (1) entre la position dans laquelle ce toit (1) est en place sur le véhicule et la position dans laquelle le toit est rangé à l'intérieur du coffre du véhicule.

7. Arceau de protection conforme à la revendication 6, **caractérisé en ce que** la transmission entre le mouvement de pivotement du toit repliable (1) et la rotation de la tige filetée (10) est réalisée au moyen d'une série de pignons (13, 14, 15) engrenés les uns avec les autres pour obtenir le rapport de multiplication approprié.

8. Arceau de protection conforme à l'une des revendications 1 à 7, **caractérisé en ce que** les extrémités (5b) de chaque élément d'arceau (5a) sont engagées dans des évidements allongés (17) pratiqués dans une poutre creuse (6) s'étendant à l'avant de la plage arrière (3) du véhicule, la longueur desdits évidements allongés (17) étant suffisante pour permettre le déplacement desdites extrémités (5b) des éléments d'arceau (5a) entre lesdites première et seconde positions.

## Claims

1. A roll-over bar for a convertible folding-roof vehicle (1), the bar (5) being integral with the vehicle body and being movable between a retracted position in which the folding roof (1) is on the vehicle and a position in which the roof (1) is absent and the bar (5) projects sufficiently above the rear surface (3) of the vehicle to protect the passengers (P) if the vehicle overturns, **characterised in that** the bar (5) comprises two components (5a) articulated to one another at the top of the bar and the bottom ends (5b) of each bar component (5) can slide along a straight line (D) parallel to the rear surface (3) of the vehicle and situated under the said surface, between a first position in which the two ends (5b) of the bar components (5a) are remote from one another and the joint (7) is near the straight line (D) and a second position in which the two ends (5b) of the bar components are close to one another and the joint (7) is remote from the line (D).

2. A roll-over bar according to claim 1, **characterised in that** it is made up of two bars (5) spaced apart and aligned along the line (D).

3. A roll-over bar according to claim 1 or 2, **characterised in that** each end (5b) of a bar component (5) comprises a roller (8) mounted in a slide (9) extending along the line (D).

4. A roll-over bar according to any of claims 1 to 3, **characterised in that** the ends (5b) of the bar components (5) are brought together or moved apart by rotation of a threaded rod (10) engaging in corresponding internal screwthreads (11) integral with the ends (5b) of the bar components, the pitch of the screwthread on the threaded rod (10) being opposite to one of the internal screwthreads relative to the other.

5. A roll-over bar according to claim 4, **characterised in that** the threaded rod (10) is rotated by a motor (21).

6. A roll-over bar according to claim 4, **characterised in that** the threaded rod (10) is rotated by the folding roof (1) pivoting between the position in which the roof (1) is on the vehicle and the position in which the roof is stowed in the boot.

7. A roll-over bar according to claim 6, **characterised in that** the pivoting motion of the folding roof (1) is transmitted to and rotates the threaded rod (10) via a number of gearwheels (13, 14, 15) engaging in one another to obtain the appropriate gear ratio.

8. A roll-over bar according to any of claims 1 to 7, **characterised in that** the ends (5b) of each bar component (5a) engage in elongate recesses (17) formed in a hollow beam (6) extending forward from the rear surface (3) of the vehicle, the length of the elongate recesses (17) being sufficient for the said ends (5b) of the bar components (5a) to move between the said first and second positions.

## Patentansprüche

1. Überrollbügel für Cabriofahrzeug mit zusammenfaltbarem Dach (1), wobei dieser Bügel (5) einstückig mit dem Chassis des Fahrzeugs ausgebildet und verschiebbar ist zwischen einer eingezogenen Position, die mit der Anordnung des zusammenfaltbaren Daches (1) auf dem Fahrzeug vereinbar ist, und einer Position, in welcher der Bügel (5) in Abwesenheit des Daches (1) genügend von dem hinteren Bereich (3) des Fahrzeugs vorspringt, um die Insassen (P) im Falle des Überschlagens des Fahrzeugs zu schützen, **dadurch gekennzeichnet, dass** der Bügel (5) aus zwei miteinander gelenkig an der Spitze des Bügels verbundenen Bügelelementen (5a) besteht, wobei die unteren Enden (5b) jedes Bügelelementes (5) entlang einer Geraden (D), die parallel zu dem hinteren Bereich (3) des Fahrzeugs liegt und unter diesem Bereich angeordnet ist, gleiten können zwischen einer ersten Position, in welcher die beiden Enden (5b) der Bügelelemente (5a) voneinander beabstandet sind und die Gelenkverbindung (7) nahe an der Geraden (D) liegt, und einer zweiten Position, in welcher die beiden Enden (5b) der Bügelelemente nahe beieinander liegen und die Gelenkverbindung (7) von der Geraden (D) beabstandet angeordnet ist.

2. Überrollbügel gemäß Anspruch 1, **dadurch gekennzeichnet, dass** er aus zwei voneinander beabstandet angeordneten Bügeln (5) besteht, die gemäß der Geraden (D) ausgerichtet sind.

3. Überrollbügel gemäß einem der Ansprüche 1 oder 2, **dadurch gekennzeichnet, dass** jedes Ende (5b) eines Bügelelementes (5) eine Reibrolle (8) aufweist, die in einer Gleitschiene (9) angebracht ist, welche sich gemäß der Geraden (D) erstreckt.

4. Überrollbügel gemäß einem der Ansprüche 1 bis 3, **dadurch gekennzeichnet, dass** die Annäherung oder beabstandete Anordnung der Enden (5b) der Bügelelemente (5) durch die Drehung einer mit Gewinde versehenen Stange (10) gesteuert wird, die in entsprechende Innengewinde (11) eingreift, welche einstückig mit den Enden (5b) der Bügelelemente ausgebildet sind, wobei der Gewindegang der mit Gewinde versehenen Stange (10) für eines der Innengewinde bezüglich des anderen Innengewindes umgedreht ist.

5. Überrollbügel gemäß Anspruch 4, **dadurch gekennzeichnet, dass** die Drehung der mit Gewinde versehenen Stange (10) von einem Motor (21) gesteuert wird.

6. Überrollbügel gemäß Anspruch 4, **dadurch gekennzeichnet, dass** die Drehung der mit Gewinde versehenen Stange (10) durch das Schwenken des zusammenfaltbaren Daches (1) zwischen der Position, in welcher dieses Dach (1) auf dem Fahrzeug angeordnet ist, und der Position, in welcher das Dach im Inneren des Kofferraumes des Fahrzeugs verstaut ist.

7. Überrollbügel gemäß Anspruch 6, **dadurch gekennzeichnet, dass** die Übertragung zwischen der Schwenkbewegung des zusammenfaltbaren Daches (1) und der Drehung der mit Gewinde versehenen Stange (10) mittels einer Reihe ineinander eingreifender Ritzel (13, 14, 15) erreicht wird, um das geeignete Übersetzungsverhältnis zu erzielen.

8. Überrollbügel gemäß einem der Ansprüche 1 bis 7, **dadurch gekennzeichnet, dass** die Enden (5b) jedes Bügelelementes (5a) in längliche Aussparungen (17) eingreifen, die in einem hohlen Träger (6) ausgebildet sind, der sich im vorderen Teil des hinteren Bereiches (3) des Fahrzeugs erstreckt, wobei die Länge der länglichen Aussparungen (17) ausreicht, um die Verschiebung der Enden (5b) der Bügelelemente (5a) zwischen der ersten und zweiten Position zuzulassen.
